(19) Europäisches Patentamt
European Patent Office
Office européen des brevets

(11) **EP 3 270 206 A1**

(12) **EUROPEAN PATENT APPLICATION**

(43) Date of publication:
**17.01.2018 Bulletin 2018/03**

(21) Application number: **16002592.0**

(22) Date of filing: **06.12.2016**

(51) Int Cl.:
**G02B 13/00** (2006.01)  **G02B 5/18** (2006.01)
**G02B 27/42** (2006.01)  **G02B 27/44** (2006.01)
*G02B 27/09* (2006.01)  *G02B 27/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.07.2016 US 201662361641 P**

(71) Applicant: **Everready Precision Ind. Corp. Kaohsiung City 811 (TW)**

(72) Inventors:
• **Chern, Jyh-Long**
  **302 Hsinchu County (TW)**
• **YEN, Chih-Ming**
  **114 Taipei City (TW)**

(74) Representative: **Zeitler Volpert Kandlbinder Patent- und Rechtsanwälte Partnerschaft mbB Herrnstrasse 44 80539 München (DE)**

(54) **OPTICAL DEVICE AND OPTICAL LENS MODULE THEREOF**

(57)     An optical device and an optical lens module are provided. The optical device includes an optical lens module, a sensor and a housing. The optical lens module at least includes a first lens element and a second lens element. The first lens element is a spherical lens or an aspheric lens. The second lens element is a flat lens. The flat lens has at least one first microstructure. A light beam passing through the at least one first microstructure is shaped by the at least one first microstructure. After an ambient light beam outside the optical device passes through the optical lens module, the ambient light beam is sensed by the sensor. The optical lens module and the sensor are supported or fixed by the housing. The use of the flat lens can effectively reduce the total track length of the camera module.

FIG.6

**Description**

CROSS-REFERENCE TO RELATED APPLICATION

This application claims the benefit of U.S. provisional application Serial No. 62/361,641, filed July 13, 2016, the subject matter of which is incorporated herein by reference.

FIELD OF THE INVENTION

The present invention relates to an optical device, and more particularly to an optical device and an optical lens module with a flat lens.

BACKGROUND OF THE INVENTION

Recently, with the development of electronic industries and the advance of industrial technologies, various electronic devices are designed toward small size, light weightiness and easy portability. Consequently, these electronic devices can be applied to mobile business, entertainment or leisure purposes whenever or wherever the users are. For example, various image pickup devices are widely used in many kinds of fields such as smart phones, wearable devices or any other appropriate electronic devices. Since the image pickup devices are small and portable, the users can take the imaging devices to capture images and store the images according to the users' requirements. Alternatively, the images can be uploaded to the internet through mobile networks. In other words, these electronic devices not only have important commercial values but also provide more colorful lives to people.

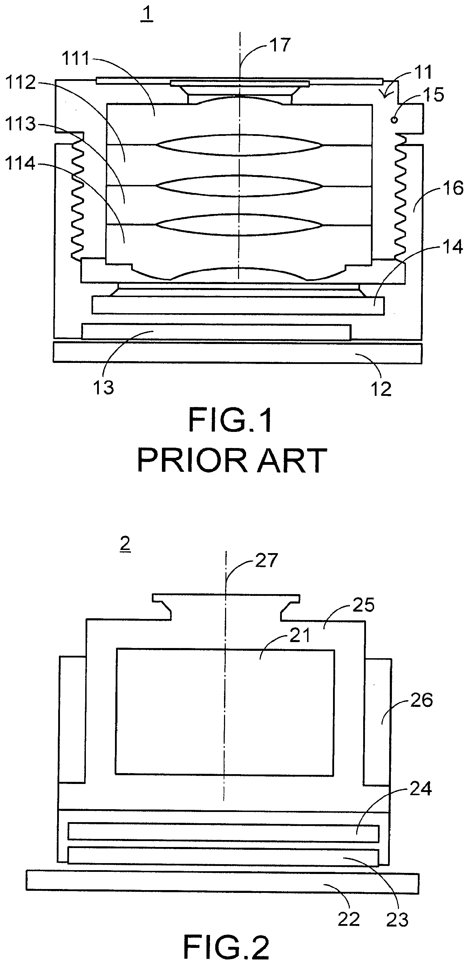

FIG. 1 schematically illustrates a conventional image pickup device. As shown in FIG. 1, the conventional image pickup device 1 comprises an optical lens module 11, a printed circuit board (PCB) 12, a sensor 13, a filter 14, a lens barrel 15 and a housing 16. The sensor 13 is arranged between the optical lens module 11 and the printed circuit board 12. The filter 14 is arranged between the optical lens module 11 and the sensor 13. The optical lens module 11 is fixed by the lens barrel 15. The sensor 13, the filter 14, the lens barrel 15 and/or other components are supported and fixed by the housing 16. The optical lens module 11 comprises plural lens elements 111, 112, 113 and 114 along an optical axis 17. After the ambient light beams outside the image pickup device 1 pass through the optical lens module 11 and the filter 14 sequentially, the ambient light beams are sensed by the sensor 13. The printed circuit board 12 is connected with sensor 13 to receive and process a sensing signal from the sensor 13. Consequently, an image is acquired.

However, the conventional image pickup device 1 still has some drawbacks. For example, due to the limitations of optical technologies, the lens elements 111, 112, 113 and 114 of the optical lens module 11 are spherical lenses or aspheric lenses. Consequently, the light beams passing through the lens elements 111, 112, 113 and 114 propagate along the desired optical path. Since the spherical lenses or the aspheric lenses are non-plate lenses, the total track length (TTL) of the camera module of the image pickup device 1 cannot be effectively reduced. Under this circumstance, it is difficult to reduce the weightiness, the thickness and the volume of the image pickup device 1.

Moreover, after the optical lens module 11 is embedded in the image pickup device 1, the optical lens module 11 is usually subjected to a temperature change. Moreover, according to the application requirements, a heat source resulting in the temperature change is possibly located beside the optical lens module 11. Because of the curvy surface of the non-plate lens, the imaging effect is subjected to a non-linear change in response to the temperature change. As known, it is difficult to compensate and correct the non-linear change of the imaging effect. Therefore, it is important to effectively reduce the sensitivity of the optical lenses to the temperature change.

In other words, the conventional image pickup device needs to be further improved.

SUMMARY OF THE INVENTION

For overcoming the drawbacks of the conventional technologies, the present invention provides an optical device. The optical device uses at least one flat lens to effectively reduce the total track length (TTL) of the camera module. Moreover, the optical device is assembled and positioned easily, and is effective to reduce the sensitivity to temperature change.

For overcoming the drawbacks of the conventional technologies, the present invention provides an optical lens module for an optical device. The optical lens module comprises at least one flat lens with a microstructure. After the light beams pass through the microstructure of the flat lens, the light beams are shaped.

In accordance with an aspect of the present invention, there is provided an optical device. The optical device includes an optical lens module, a sensor and a housing. The optical lens module at least includes a first lens element and a second lens element. The first lens element is a spherical lens or an aspheric lens. The second lens element is a flat lens. The flat lens has at least one first microstructure. A light beam passing through the at least one first microstructure is shaped by the at least one first microstructure. After an ambient light beam outside the optical device passes through the optical lens module, the ambient light beam is sensed by the sensor. The optical lens module and the sensor are supported or fixed by the housing.

In an embodiment, the flat lens further includes a substrate, and the at least one first microstructure is formed on at least one surface of the substrate.

In an embodiment, the optical lens module further includes a third lens element, and the third lens element is an additional flat lens with at least one second microstructure. A light beam passing through the at least one second microstructure is shaped by the at least one second microstructure. The second lens element and the third lens element are arranged between the first lens element and the sensor, or the first lens element is arranged between the second lens element and the third lens element, or the first lens element is arranged between the third lens element and the sensor.

In an embodiment, an optical power of the first lens element, an optical power of the second lens element and an optical power of the third lens element have signs (+, +, +), (+, +, -), (+, -, +), (+, -, -), (-, +, +), (-, +, -) or (-, -, +).

In an embodiment, the ambient light beam travels to the sensor after passing through the first lens element and the second lens element sequentially, or the ambient light beam travels to the sensor after passing through the second lens element and the first lens element sequentially.

In an embodiment, the optical lens module further includes a fourth lens element corresponding to the first lens element or the second lens element. The fourth lens element and the first lens element are replaceable with each other or the fourth lens element and the second lens element are replaceable with each other, so that the optical lens module provides a zoom function.

In an embodiment, the fourth lens element and one of the first lens element and the second lens element are replaced with each other by a manually-driving mechanism, a mechanically-driving mechanism, an electrically-driving mechanism, a magnetically-driving mechanism and/or an electromagnetically-driving mechanism.

In an embodiment, the optical lens module includes plural flat lenses, and a total thickness of the plural flat lenses is not larger than 3mm.

In an embodiment, a thickness of the flat lens is not larger than 0.21 mm.

In an embodiment, the optical device further includes a filter, and the filter is arranged between the optical lens module and the sensor. After plural light beams in different wavelength bands pass through the filter, the plural light beams are filtered by the filter.

In an embodiment, at least one third microstructure is formed on the filter.

In an embodiment, the optical device further includes a lens barrel, and the optical lens module is fixed by the lens barrel, wherein a relative position between the lens barrel and the housing is adjustable.

In an embodiment, the relative position between the lens barrel and the housing is adjusted by a manually-driving mechanism, a mechanically-driving mechanism, an electrically-driving mechanism, a magnetically-driving mechanism and/or an electromagnetically-driving mechanism.

In an embodiment, at least one of the first lens element and the second lens element and a reflective optical element, a diffractive optical element and/or a refractive optical element are combined as a lens group.

In an embodiment, an optical axis of the optical device is a skew line or a multiple-segment line.

In an embodiment, the first microstructure has an even-order symmetrical phase relationship given by a formula:

$$\phi(r) = dor \frac{2\pi}{\lambda_0} \left( df_0 + df_1 r^2 + df_2 r^4 + df_3 r^6 + df_4 r^8 + ... \right);$$

$$r^2 = x^2 + y^2 ,$$

where, $\phi(r)$ is a phase function, r is a radius vector, dor is a diffraction order, $\lambda_0$ is a wavelength of a light beam passing through the first microstructure, $df_0$ is a zero-order coefficient, $df_1$ is a second-order coefficient, $df_2$ is a fourth-order coefficient, $df_3$ is a sixth-order coefficient, and $df_4$ is an eighth-order coefficient; or the first microstructure has an all-order symmetrical phase relationship given by a formula:

$$\phi(H) = dor \frac{2\pi}{\lambda_0} \left( df_0 + df_1 H + df_2 H^2 + df_3 H^3 + df_4 H^4 + ... \right);$$

$$H = \left| \sqrt{x^2 + y^2} \right| ,$$

where, $\phi(H)$ is a phase function, r is a radius vector, dor is a diffraction order, $\lambda_0$ is a wavelength of a light beam passing through the first microstructure, $df_0$ is a zero-order coefficient, $df_1$ is a first-order coefficient, $df_2$ is a second-order coefficient, $df_3$ is a third-order coefficient, and $df_4$ is a fourth-order coefficient; or the first microstructure has an asymmetrical phase relationship given by a formula:

$$\phi(x, y) = \sum \phi_i , \text{ and } i=1, 2,...N;$$

where,

$$\phi_i = dor \cdot \left( \frac{2\pi}{\lambda_0} \right) \cdot df_i \left( x^j \right)\left( y^k \right);$$

$$i = \frac{1}{2}\left[ (j + k)^2 + j + 3k \right];$$

$$j = o - k ;$$

$$k = i - \frac{o \cdot (o + 1)}{2};$$

$$o = floor\left[ \frac{\sqrt{1 + 8i} - 1}{2} \right] ,$$

where, $\phi(x, y)$ is a phase function, dor is the diffraction order, $\lambda_0$ is a wavelength of a light beam passing through the first microstructure, and $df_i$ is a diffraction coefficient.

In accordance with another aspect of the present invention, there is provided an optical lens module for an optical device. The optical lens module includes a first lens element, a second lens element and a third lens element. The first lens element, the second lens element and the third lens element are sequentially arranged along an optical axis, or the second lens element, the first lens element and the third lens element are sequentially arranged along the optical axis, or the second lens element, the third lens element and the first lens element are sequentially arranged along the optical axis. The first lens element is a spherical lens or an aspheric lens. The second lens element is a first flat lens with at least one first microstructure. The third lens element is a second flat lens with at least one second microstructure. A light beam passing through the at least one first microstructure is shaped by the at least one first microstructure. A light beam passing through the at least one second microstructure is shaped by the at least one second microstructure.

In an embodiment, the second lens element further includes a first substrate, and the at least one first microstructure is formed on at least one surface of the first substrate. The third lens element further includes a second substrate, and the at least one second microstructure is formed on at least one surface of the second substrate.

In an embodiment, an optical power of the first lens element, an optical power of the second lens element and an optical power of the third lens element have signs (+, +, +), (+, +, -), (+, -, +), (+, -, -), (-, +, +), (-, +, -) or (-, -, +).

In an embodiment, a thickness of the second lens element is not larger than 0.21 mm, or a thickness of the third lens element is not larger than 0.21 mm.

In an embodiment, at least one of the first lens element, the second lens element and the third lens element and a reflective optical element, a diffractive optical element and/or a refractive optical element are combined as a lens group.

In an embodiment, an optical axis of the optical device is a skew line or a multiple-segment line.

In an embodiment, the first microstructure has an even-order symmetrical phase relationship given by a formula:

$$\phi(r) = dor\,\frac{2\pi}{\lambda_0}\left(df_0 + df_1 r^2 + df_2 r^4 + df_3 r^6 + df_4 r^8 + ...\right);$$

$$r^2 = x^2 + y^2,$$

where, $\phi(r)$ is a phase function, r is a radius vector, dor is a diffraction order, $\lambda_0$ is a wavelength of a light beam passing through the first microstructure, $df_0$ is a zero-order coefficient, $df_1$ is a second-order coefficient, $df_2$ is a fourth-order coefficient, $df_3$ is a sixth-order coefficient, and $df_4$ is an eighth-order coefficient; or the first microstructure has an all-order symmetrical phase relationship given by a formula:

$$\phi(H) = dor\,\frac{2\pi}{\lambda_0}\left(df_0 + df_1 H + df_2 H^2 + df_3 H^3 + df_4 H^4 + ...\right);$$

$$H = \left|\sqrt{x^2 + y^2}\right|,$$

where, $\phi(H)$ is a phase function, r is a radius vector, dor is a diffraction order, $\lambda_0$ is a wavelength of a light beam passing through the first microstructure, $df_0$ is a zero-order coefficient, $df_1$ is a first-order coefficient, $df_2$ is a second-order coefficient, $df_3$ is a third-order coefficient, and $df_4$ is a fourth-order coefficient; or the first microstructure has an asymmetrical phase relationship given by a formula:

$$\phi(x, y) = \sum \phi_i \text{, and i=1, 2,...N;}$$

where,

$$\phi_i = dor \cdot \left(\frac{2\pi}{\lambda_0}\right) \cdot df_i\left(x^j\right)\left(y^k\right);$$

$$i = \frac{1}{2}\left[(j + k)^2 + j + 3k\right];$$

$$j = o - k;$$

$$k = i - \frac{o \cdot (o + 1)}{2};$$

$$o = floor\left[\frac{\sqrt{1 + 8i} - 1}{2}\right],$$

where, $\phi(x, y)$ is a phase function, dor is the diffraction order, $\lambda_0$ is a wavelength of a light beam passing through the first microstructure, and $df_i$ is a diffraction coefficient.

From the above descriptions, at least one lens element of the optical lens module is a flat lens with a microstructure. The optical device has the following advantages. Firstly, the total track length (TTL) of the camera module of the optical device is effectively reduced. Consequently, the weightiness, the thickness and the volume of the optical device are reduced. Secondly, the use of the flat lens can facilitate assembling and positioning the optical lens module during the process of producing the optical lens module. Thirdly, the flat lens does not have the curvy surface. Consequently, the imaging effect is not readily subjected to the non-linear change in response to the temperature change. Under this circumstance, the non-linear change of the imaging effect can be effectively compensated and corrected.

The above objects and advantages of the present invention will become more readily apparent to those ordinarily skilled in the art after reviewing the following detailed description and accompanying drawings, in which:

BRIEF DESCRIPTION OF THE DRAWINGS

FIG. 1 schematically illustrates a conventional image pickup device;

FIG. 2 schematically illustrates the implementation concept of an optical device according to an embodiment of the present invention;

FIG. 3 schematically illustrates the implementation concept of a flat lens with positive optical power;

FIG. 4 schematically illustrates the implementation concept of a flat lens with negative optical power;

FIG. 5 schematically illustrates the implementation concept of a first exemplary optical lens module used in the optical device of FIG. 2;

FIG. 6 schematically illustrates the implementation concept of a second exemplary optical lens module used in the optical device of FIG. 2; and

FIG. 7 schematically illustrates the implementation concept of a third exemplary optical lens module used in the optical device of FIG. 2.

DETAILED DESCRIPTION OF THE PREFERRED EMBODIMENT

FIG. 2 schematically illustrates the implementation concept of an optical device according to an embodiment of the present invention. For example, the optical device 2 is an image pickup device. In this embodiment, the optical device 2 comprises an optical lens module 21, a circuit board 22, a sensor 23, a filter 24, a lens barrel 25 and a housing 26. The sensor 23 is arranged between the optical lens module 21 and the circuit board 22. The filter 24 is arranged between the optical lens module 21 and the sensor 23. The optical lens module 21 is fixed by the lens barrel 25. The sensor 23, the filter 24, the lens barrel 25 and/or other components are supported and fixed by the housing 26. Preferably but not exclusively, the relative position between the lens barrel 25 and the housing 26 is adjustable. For example, the relative position between the lens barrel 25 and the housing 26 is adjusted by a manually-driving mechanism, a mechanically-driving mechanism, an electrically-driving mechanism, a magnetically-driving mechanism and/or an electromagnetically-driving mechanism.

After the light beams in different wavelength bands pass through the filter 24, the light beams are filtered. The band-pass range of the filter 24 is designed according to the demand of the sensor 23. For example, only the light beams having a specified wavelength are allowed to be directed to the sensor 23. Preferably but not exclusively, the filter 24 has optical power. Optionally, the filter 24 is equipped with a microstructure. After the ambient light beams of the optical device 2 pass through the optical lens module 21 and the filter 24 sequentially, the ambient light beams are received by the sensor 23. The circuit board 22 s connected with sensor 23 to receive and process a sensing signal from the sensor 23. Consequently, an image is acquired. As shown in FIG. 2, an optical axis 27 of the optical device 2 is a linear optical axial that is perpendicular to the sensor 23. In some other embodiments, the optical axis is a skew line, or the optical axis is a multiple-segment line.

The structure of the optical lens module 21 will be described as follows. The optical lens module 21 at least comprises a flat lens. The flat lens has positive optical power or negative optical power.

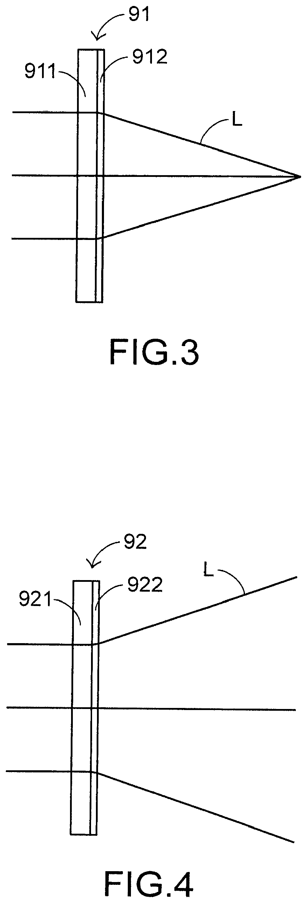

FIG. 3 schematically illustrates the implementation concept of a flat lens with positive optical power. In case that the flat lens 91 has the positive optical power, the light beams L passing through the flat lens 91 are converged and/or focused. The flat lens 91 comprises a substrate 911 and a microstructure 912. The microstructure 912 is formed on at least one surface of the substrate 911. For example, the microstructure 912 is a diffractive optical element (DOE). After the light beams L pass through the microstructure 912, the light beams L are shaped by the microstructure 912. Consequently, the light beams L outputted from the flat lens 91 can be flexibly adjusted. The ways of designing the microstructure 912 to generate the light beams according to the user's requirements are well known to those skilled in the art, and are not redundantly described herein. Preferably but not exclusively, the thickness of the flat lens 91 having the positive optical power is smaller than 0.21 mm.

FIG. 4 schematically illustrates the implementation concept of a flat lens with negative optical power. In case that the flat lens 92 has the negative optical power, the light beams L passing through the flat lens 92 are diverged. The flat lens 92 comprises a substrate 921 and a microstructure 922. The microstructure 922 is formed on at least one surface of the substrate 921. For example, the microstructure 922 is a diffractive optical element (DOE). After the light beams L pass through the microstructure 922, the light beams L are shaped by the microstructure 922. Consequently, the light beams L outputted from the flat lens 92 can be flexibly adjusted. The ways of designing the microstructure 922 to generate the light beams according to the user's requirements are well known to those skilled in the art, and are not redundantly described herein. Preferably but not exclusively, the thickness of the flat lens 92 having the negative optical power is smaller than 0.21 mm.

Preferably but not exclusively, the microstructure 912 of the flat lens 91 having the positive optical power (see FIG. 3) or the microstructure 922 of the flat lens 92 having the negative optical power (see FIG. 4) is a phase-type optical element that complies with a phase relationship. Three examples of the phase relationship will be described in more detail as follows.

In a first example, each of the microstructures 912 and 922 has an even-order symmetrical phase relationship given by the following formula:

$$\phi(r) = dor \frac{2\pi}{\lambda_0} \left( df_0 + df_1 r^2 + df_2 r^4 + df_3 r^6 + df_4 r^8 + ... \right);$$

$$r^2 = x^2 + y^2 .$$

In the above formula, $\phi(r)$ is a phase function, r is a radius vector, dor is a diffraction order, $\lambda_0$ is a wavelength of the light beams passing through the microstructure, $df_0$ is a zero-order coefficient, $df_1$ is a second-order coefficient, $df_2$ is a fourth-order coefficient, $df_3$ is a sixth-order coefficient, and $df_4$ is an eighth-order coefficient.

In a second example, each of the microstructures 912 and 922 has an all-order symmetrical phase relationship given by the following formula:

$$\phi(H) = dor \frac{2\pi}{\lambda_0} \left( df_0 + df_1 H + df_2 H^2 + df_3 H^3 + df_4 H^4 + ... \right);$$

$$H = \left| \sqrt{x^2 + y^2} \right| .$$

In the above formula, $\phi(H)$ is a phase function, r is a radius vector, dor is a diffraction order, $\lambda_0$ is a wavelength of the light beams passing through the microstructure, $df_0$ is a zero-order coefficient, $df_1$ is a first-order coefficient, $df_2$ is a second-order coefficient, $df_3$ is a third-order coefficient, and $df_4$ is a fourth-order coefficient.

In a third example, each of the microstructures 912 and 922 has an asymmetrical phase relationship given by the following formula:

$$\phi(x, y) = \sum \phi_i , \text{ and i=1, 2,...N;}$$

where,

$$\phi_i = dor \cdot \left( \frac{2\pi}{\lambda_0} \right) \cdot df_i \left( x^j \right)\left( y^k \right);$$

$$i = \frac{1}{2} \left[ (j + k)^2 + j + 3k \right];$$

$$j = o - k \; ;$$

$$k = i - \frac{o \cdot (o+1)}{2} ;$$

$$o = floor\left[ \frac{\sqrt{1+8i}-1}{2} \right].$$

In the above formula, $\phi(x, y)$ is a phase function, dor is the diffraction order, $\lambda_0$ is a wavelength of the light beams passing through the microstructure, and $df_i$ is a diffraction coefficient.

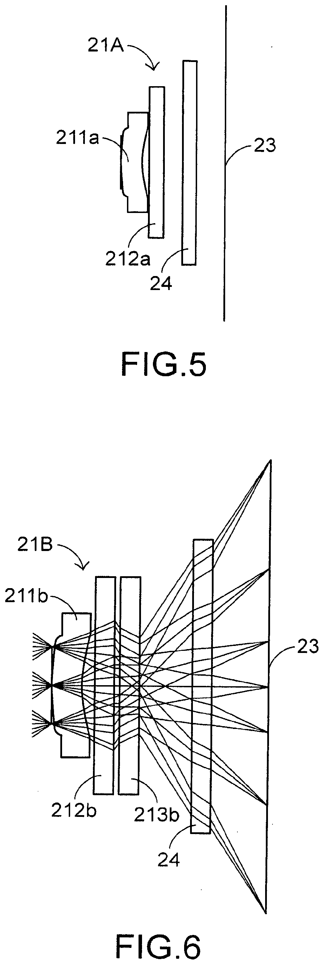

FIG. 5 schematically illustrates the implementation concept of a first exemplary optical lens module used in the optical device of FIG. 2. The optical lens module 21A is a two-lens optical lens module. The optical lens module 21A comprises a first lens element 211 a and a second lens element 212a along an optical axis (not shown). The first lens element 211 a is a spherical lens or an aspheric lens. The second lens element 212a is the flat lens 91 having the positive optical power (see FIG. 3) or the flat lens 92 having the negative optical power (see FIG. 4). The optical lens module as shown in FIG. 5 is presented herein for purpose of illustration and description only. In a variant example, the first lens element 211a is the flat lens 91 having the positive optical power (see FIG. 3) or the flat lens 92 having the negative optical power (see FIG. 4), and the second lens element 212a is a spherical lens or an aspheric lens.

For increasing the optical performance, the present invention further provides a three-lens optical lens module. FIG. 6 schematically illustrates the implementation concept of a second exemplary optical lens module used in the optical device of FIG. 2. The optical lens module 21 B is a three-lens optical lens module. The optical lens module 21 B comprises a first lens element 211 b, a second lens element 212b and a third lens element 213b along an optical axis (not shown). The first lens element 211 b is a spherical lens or an aspheric lens. The second lens element 212b is the flat lens 91 having the positive optical power (see FIG. 3) or the flat lens 92 having the negative optical power (see FIG. 4). The third lens element 213b is also the flat lens 91 having the positive optical power (see FIG. 3) or the flat lens 92 having the negative optical power (see FIG. 4). The optical power of the first lens element 211 b, the optical power of the second lens element 212b and the optical power of the third lens element 213b are designed according to the practical requirements. For example, the signs of the optical power of these lens elements 211 b, 212b and 213b are (+, +, +), (+, +, -), (+, -, +), (+, -, -), (-, +, +), (-, +, -) or (-, -, +).

The optical lens module as shown in FIG. 6 is presented herein for purpose of illustration and description only. In a variant example, the first lens element 211 b is the flat lens 91 having the positive optical power (see FIG. 3) or the flat lens 92 having the negative optical power (see FIG. 4), the second lens element 212b is a spherical lens or an aspheric lens, and the third lens element 213b is the flat lens 91 having the positive optical power (see FIG. 3) or the flat lens 92 having the negative optical power (see FIG. 4).

In another variant example, the first lens element 211 b is the flat lens 91 having the positive optical power (see FIG. 3) or the flat lens 92 having the negative optical power (see FIG. 4), the second lens element 212b is the flat lens 91 having the positive optical power (see FIG. 3) or the flat lens 92 having the negative optical power (see FIG. 4), and the third lens element 213b is a spherical lens or an aspheric lens.

In a further variant example, a reflective optical element, a diffractive optical element and/or a refractive optical element and one of the first lens element 211 b, the second lens element 212b and the third lens element 213b are combined as a lens group.

Preferably but not exclusively, the number of the flat lenses is not restricted as long as the overall thickness of the flat lenses of the optical lens module is smaller than 3mm.

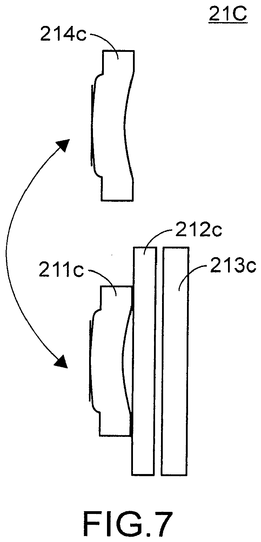

FIG. 7 schematically illustrates the implementation concept of a third exemplary optical lens module used in the optical device of FIG. 2. In comparison with the optical lens module 21 B of FIG. 6, the optical lens module 21C of this embodiment further comprises a fourth lens element 214c corresponding to the first lens element 211 c. The first lens element 211c and the fourth lens element 214c can be replaceable with each other. Consequently, the optical lens module 21C provides a zoom function. The operation of replacing the first lens element 211c with the fourth lens element 214c or replacing the fourth lens element 214c with the first lens element 211 c is performed by a manually-driving mechanism, a mechanically-driving mechanism, an electrically-driving mechanism, a magnetically-driving mechanism and/or an electromagnetically-driving mechanism. The other components of the optical lens module 21C are similar to those of the optical lens module 21 B, and are not redundantly described herein.

The optical lens module as shown in FIG. 7 is presented herein for purpose of illustration and description only.

In a variant example, the fourth lens element 214c corresponds to the second lens element 212c. Moreover, the fourth lens element 214c and the second lens element 212c can be replaceable with each other. Consequently, the optical lens module 21 C provides a zoom function. In another variant example, the fourth lens element 214c corresponds to the third lens element 213c. Moreover, the fourth lens element 214c and the third lens element 213c can be replaceable with each other. Consequently, the optical lens module 21C provides a zoom function.

From the above descriptions, the present invention provides an optical device with an optical lens module. At least one lens element of the optical lens module is a flat lens with a microstructure. The optical device has the following advantages. Firstly, the total track length (TTL) of the camera module of the optical device is effectively reduced. Consequently, the weightiness, the thickness and the volume of the optical device are reduced. Secondly, the use of the flat lens can facilitate assembling and positioning the optical lens module during the process of producing the optical lens module. Thirdly, the flat lens does not have the curvy surface. Consequently, the imaging effect is not readily subjected to the non-linear change in response to the temperature change. Under this circumstance, the non-linear change of the imaging effect can be effectively compensated and corrected. In other words, the optical device of the present invention is industrially valuable.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

**Claims**

1.   An optical device (2), **characterized in that** comprising:

an optical lens module (21, 21 a, 21 b, 21 c) at least comprising a first lens element (211 a, 211b, 211 c) and a second lens element (212a, 212b, 212c), wherein the first lens element (211 a, 211b, 211 c) is a spherical lens or an aspheric lens, the second lens element (212a, 212b, 212c) is a flat lens (91, 92), and the flat lens (91, 92) has at least one first microstructure (912, 922), wherein a light beam (L) passing through the at least one first microstructure (912, 922) is shaped by the at least one first microstructure (912, 922);
a sensor (23), wherein after an ambient light beam (L) outside the optical device (2) passes through the optical lens module (21, 21a, 21b, 21c), the ambient light beam (L) is sensed by the sensor (23); and
a housing (26), wherein the optical lens module (21, 21a, 21b, 21c) and the sensor (23) are supported or fixed by the housing (26).

2.   The optical device (2) according to claim 1, **characterized in that** the flat lens (91, 92) further comprises a substrate (911, 921), and the at least one first microstructure (912, 922) is formed on at least one surface of the substrate (911, 921).

3.   The optical device (2) according to claim 1, **characterized in that** the optical lens module (21, 21a, 21b, 21c) further comprises a third lens element (213b, 213c), and the third lens element (213b, 213c) is an additional flat lens (91, 92) with at least one second microstructure (912, 922), wherein a light beam (L) passing through the at least one second microstructure (912, 922) is shaped by the at least one second microstructure (912, 922), wherein the second lens element (212a, 212b, 212c) and the third lens element (213b, 213c) are arranged between the first lens element (211a, 211b, 211c) and the sensor (23), or the first lens element (211a, 211b, 211c) is arranged between the second lens element (212a, 212b, 212c) and the third lens element (213b, 213c), or the first lens element (211a, 211b, 211c) is arranged between the third lens element (213b, 213c) and the sensor (23).

4.   The optical device (2) according to claim 3, **characterized in that** an optical power of the first lens element (211 a, 211 b, 211 c), an optical power of the second lens element (212a, 212b, 212c) and an optical power of the third lens element (213b, 213c) have signs (+, +, +), (+, +, -), (+, -, +), (+, -, -), (-, +, +), (-, +, -) or (-, -, +).

5.   The optical device (2) according to claim 1, **characterized in that** the ambient light beam (L) travels to the sensor (23) after passing through the first lens element (211a, 211b, 211c) and the second lens element (212a, 212b, 212c) sequentially, or the ambient light beam (L) travels to the sensor (23) after passing through the second lens element (212a, 212b, 212c) and the first lens element (211a, 211b, 211c) sequentially.

6.   The optical device (2) according to claim 1, **characterized in that** the optical lens module (21, 21a, 21b, 21c) further comprises a fourth lens element (214c) corresponding to the first lens element (211 a, 211 b, 211 c) or the second lens element (212a, 212b, 212c), wherein the fourth lens element (214c) and the first lens element (211a, 211b, 211c) are replaceable with each other or the fourth lens element (214c) and the second lens element (212a, 212b, 212c) are replaceable with each other, so that the optical lens module (21, 21 a, 21 b, 21 c) provides a zoom function.

7. The optical device (2) according to claim 6, **characterized in that** the fourth lens element (214c) and one of the first lens element (211a, 211b, 211c) and the second lens element (212a, 212b, 212c) are replaced with each other by a manually-driving mechanism, a mechanically-driving mechanism, an electrically-driving mechanism, a magnetically-driving mechanism and/or an electromagnetically-driving mechanism.

8. The optical device (2) according to claim 1, **characterized in that** the optical lens module (21, 21a, 21b, 21c) comprises plural flat lenses (91, 92), and a total thickness of the plural flat lenses (91, 92) is not larger than 3mm.

9. The optical device (2) according to claim 1, **characterized in that** a thickness of the flat lens (91, 92) is not larger than 0.21 mm.

10. The optical device (2) according to claim 1, **characterized in that** the optical device (2) further comprises a filter (24), and the filter (24) is arranged between the optical lens module (21, 21a, 21 b, 21c) and the sensor (23), wherein after plural light beams (L) in different wavelength bands pass through the filter (24), the plural light beams (L) are filtered by the filter (24).

11. The optical device (2) according to claim 10, **characterized in that** at least one third microstructure (912, 922) is formed on the filter (24).

12. The optical device (2) according to claim 1, **characterized in that** the optical device (2) further comprises a lens barrel (25), and the optical lens module (21, 21 a, 21 b, 21 c) is fixed by the lens barrel (25), wherein a relative position between the lens barrel (25) and the housing (26) is adjustable.

13. The optical device (2) according to claim 12, **characterized in that** the relative position between the lens barrel (25) and the housing (26) is adjusted by a manually-driving mechanism, a mechanically-driving mechanism, an electrically-driving mechanism, a magnetically-driving mechanism and/or an electromagnetically-driving mechanism.

14. The optical device (2) according to claim 1, **characterized in that** at least one of the first lens element (211 a, 211b, 211c) and the second lens element (212a, 212b, 212c) and a reflective optical element, a diffractive optical element and/or a refractive optical element are combined as a lens group.

15. The optical device (2) according to claim 1, **characterized in that** an optical axis (27) of the optical device (2) is a skew line or a multiple-segment line.

16. The optical device (2) according to claim 1, **characterized in that** the first microstructure (912, 922) has an even-order symmetrical phase relationship given by a formula:

$$\phi(r) = dor \frac{2\pi}{\lambda_0} \left( df_0 + df_1 r^2 + df_2 r^4 + df_3 r^6 + df_4 r^8 + ... \right);$$

$$r^2 = x^2 + y^2,$$

where, $\phi(r)$ is a phase function, r is a radius vector, dor is a diffraction order, $\lambda_0$ is a wavelength of a light beam (L) passing through the first microstructure (912, 922), $df_0$ is a zero-order coefficient, $df_1$ is a second-order coefficient, $df_2$ is a fourth-order coefficient, $df_3$ is a sixth-order coefficient, and $df_4$ is an eighth-order coefficient; or the first microstructure (912, 922) has an all-order symmetrical phase relationship given by a formula:

$$\phi(H) = dor \frac{2\pi}{\lambda_0} \left( df_0 + df_1 H + df_2 H^2 + df_3 H^3 + df_4 H^4 + ... \right);$$

$$H = \left| \sqrt{x^2 + y^2} \right|,$$

where, $\phi(H)$ is a phase function, r is a radius vector, dor is a diffraction order, $\lambda_0$ is a wavelength of a light beam (L) passing through the first microstructure (912, 922), $df_0$ is a zero-order coefficient, $df_1$ is a first-order coefficient, $df_2$ is a second-order coefficient, $df_3$ is a third-order coefficient, and $df_4$ is a fourth-order coefficient; or the first microstructure (912, 922) has an asymmetrical phase relationship given by a formula:

$$\phi(x, y) = \sum \phi_i \text{ , and i=1, 2,...N;}$$

where,

$$\phi_i = dor \cdot \left( \frac{2\pi}{\lambda_0} \right) \cdot df_i \left( x^j \right)\left( y^k \right);$$

$$i = \frac{1}{2}\left[ (j + k)^2 + j + 3k \right];$$

$$j = o - k \text{ ;}$$

$$k = i - \frac{o \cdot (o + 1)}{2};$$

$$o = floor\left[ \frac{\sqrt{1 + 8i} - 1}{2} \right],$$

where, $\phi(x, y)$ is a phase function, dor is the diffraction order, $\lambda_0$ is a wavelength of a light beam (L) passing through the first microstructure (912, 922), and $df_i$ is a diffraction coefficient.

17. An optical lens module (21, 21 a, 21 b, 21c) for an optical device (2), **characterized in that** the optical lens module (21, 21 a, 21 b, 21 c) comprising:

a first lens element (211 a, 211b, 211c);
a second lens element (212a, 212b, 212c); and
a third lens element (213b, 213c),
wherein the first lens element (211 a, 211b, 211c), the second lens element (212a, 212b, 212c) and the third lens element (213b, 213c) are sequentially arranged along an optical axis (27), or the second lens element (212a, 212b, 212c), the first lens element (211a, 211b, 211c) and the third lens element (213b, 213c) are sequentially arranged along the optical axis (27), or the second lens element (212a, 212b, 212c), the third lens element (213b, 213c) and the first lens element (211a, 211b, 211c) are sequentially arranged along the optical axis (27), wherein the first lens element (211a, 211b, 211c) is a spherical lens or an aspheric lens, the second lens element (212a, 212b, 212c) is a first flat lens (91, 92) with at least one first microstructure (912, 922), and the third lens element (213b, 213c) is a second flat lens (91, 92) with at least one second microstructure (912, 922), wherein a light beam (L) passing through the at least one first microstructure (912, 922) is shaped by the at least one first microstructure (912, 922), and a light beam (L) passing through the at least one second microstructure (912, 922) is shaped by the at least one second microstructure (912, 922).

18. The optical lens module (21, 21 a, 21 b, 21 c) according to claim 17, **characterized in that** the second lens element (212a, 212b, 212c) further comprises a first substrate (911, 921), and the at least one first microstructure (912, 922) is formed on at least one surface of the first substrate (911, 921), wherein the third lens element (213b, 213c) further comprises a second substrate (911, 921), and the at least one second microstructure (912, 922) is formed on at least one surface of the second substrate (911, 921).

19. The optical lens module (21, 21 a, 21 b, 21 c) according to claim 17, **characterized in that** an optical power of the first lens element (211 a, 211 b, 211c), an optical power of the second lens element (212a, 212b, 212c) and an optical power of the third lens element (213b, 213c) have signs (+, +, +), (+, +, -), (+, -, +), (+, -, -), (-, +, +), (-, +, -) or (-, -, +).

20. The optical lens module (21, 21 a, 21 b, 21 c) according to claim 17, **characterized in that** a thickness of the second lens element (212a, 212b, 212c) is not larger than 0.21mm, or a thickness of the third lens element (213b, 213c) is not larger than 0.21mm.

21. The optical lens module (21, 21 a, 21b, 21c) according to claim 17, wherein at least one of the first lens element (211a, 211b, 211c), the second lens element (212a, 212b, 212c) and the third lens element (213b, 213c) and a reflective optical element, a diffractive optical element and/or a refractive optical element are combined as a lens group.

22. The optical lens module (21, 21 a, 21 b, 21 c) according to claim 17, **characterized in that** an optical axis (27) of the optical device (2) is a skew line or a multiple-segment line.

23. The optical lens module (21, 21 a, 21 b, 21 c) according to claim 17, **characterized in that** the first microstructure (912, 922) has an even-order symmetrical phase relationship given by a formula:

$$\phi(r) = dor \frac{2\pi}{\lambda_0}\left(df_0 + df_1 r^2 + df_2 r^4 + df_3 r^6 + df_4 r^8 + ...\right);$$

$$r^2 = x^2 + y^2,$$

where, $\phi(r)$ is a phase function, r is a radius vector, dor is a diffraction order, $\lambda_0$ is a wavelength of a light beam (L) passing through the first microstructure (912, 922), $df_0$ is a zero-order coefficient, $df_1$ is a second-order coefficient, $df_2$ is a fourth-order coefficient, $df_3$ is a sixth-order coefficient, and $df_4$ is an eighth-order coefficient; or the first microstructure (912, 922) has an all-order symmetrical phase relationship given by a formula:

$$\phi(H) = dor \frac{2\pi}{\lambda_0}\left(df_0 + df_1 H + df_2 H^2 + df_3 H^3 + df_4 H^4 + ...\right);$$

$$H = \left|\sqrt{x^2 + y^2}\right|,$$

where, $\phi(H)$ is a phase function, r is a radius vector, dor is a diffraction order, $\lambda_0$ is a wavelength of a light beam (L) passing through the first microstructure (912, 922), $df_0$ is a zero-order coefficient, $df_1$ is a first-order coefficient, $df_2$ is a second-order coefficient, $df_3$ is a third-order coefficient, and $df_4$ is a fourth-order coefficient; or the first microstructure (912, 922) has an asymmetrical phase relationship given by a formula:

$$\phi(x, y) = \sum \phi_i \text{ , and i=1, 2,...N;}$$

where,

$$\phi_i = dor \cdot \left( \frac{2\pi}{\lambda_0} \right) \cdot df_i \left( x^j \right) \left( y^k \right);$$

$$i = \frac{1}{2} \left[ (j+k)^2 + j + 3k \right];$$

$$j = o - k \,;$$

$$k = i - \frac{o \cdot (o+1)}{2} \,;$$

$$o = floor \left[ \frac{\sqrt{1+8i} - 1}{2} \right],$$

where, $\phi(x, y)$ is a phase function, dor is the diffraction order, $\lambda_0$ is a wavelength of a light beam (L) passing through the first microstructure, and $df_i$ is a diffraction coefficient.

FIG.1

PRIOR ART

FIG.2

**FIG.3**

**FIG.4**

**FIG.5**

**FIG.6**

FIG.7

**Europäisches Patentamt**
**European Patent Office**
**Office européen des brevets**

## EUROPEAN SEARCH REPORT

Application Number

EP 16 00 2592

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/091552 A1 (LI JINGJING [US] ET AL) 19 April 2012 (2012-04-19) * figures 8A,8B * * figures 12-14,20-23 * | 1-23 | INV. G02B13/00 G02B5/18 G02B27/42 G02B27/44 |
| X | US 6 157 488 A (ISHII TETSUYA [JP]) 5 December 2000 (2000-12-05) * figure 22 * * figures 8,13,16,18,26,31,34,36 * | 1-23 | ADD. G02B27/09 G02B27/00 |
| X | US 2008/055727 A1 (INOGUCHI KAZUTAKA [JP]) 6 March 2008 (2008-03-06) * figures 15,16 * * figures 1-14 * | 1-23 | |
| X | FAKLIS D ET AL: "OPTICAL DESIGN WITH DIFFRACTIVE LENSES", PHOTONICS SPECTRA, LONDON, GB, 1 November 1991 (1991-11-01), pages 205-208, XP000505402, * the whole document * | 1 | |
| X | SALMAN NOACH ET AL: "INTEGRATED DIFFRACTIVE AND REFRACTIVE ELEMENTS FOR SPECTRUM SHAPING", APPLIED OPTICS, OPTICAL SOCIETY OF AMERICA, WASHINGTON, DC; US, vol. 35, no. 19, 1 July 1996 (1996-07-01), pages 3635-3639, XP000620096, ISSN: 0003-6935 * abstract * * introduction * | 1 | TECHNICAL FIELDS SEARCHED (IPC) G02B |

The present search report has been drawn up for all claims

| Place of search | Date of completion of the search | Examiner |
|---|---|---|
| Munich | 6 July 2017 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 00 2592

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2017

| Patent document cited in search report | | Publication date | Patent family member(s) | | Publication date |
|---|---|---|---|---|---|
| US 2012091552 | A1 | 19-04-2012 | TW | 201140136 A | 16-11-2011 |
| | | | US | 2012091552 A1 | 19-04-2012 |
| | | | US | 2015192782 A1 | 09-07-2015 |
| | | | WO | 2011093893 A1 | 04-08-2011 |
| US 6157488 | A | 05-12-2000 | NONE | | |
| US 2008055727 | A1 | 06-03-2008 | JP | 2008058907 A | 13-03-2008 |
| | | | US | 2008055727 A1 | 06-03-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62361641 A